# EUROPEAN PATENT APPLICATION

(11) **EP 4 592 780 A1**
(43) Date of publication of application: **30.07.2025**
(21) Application number: 24153992.3
(22) Date of filing: 25.01.2024
(51) Int. Cl.: G05B 19/418, G06Q 10/067

(54) **MANAGING A PLURALITY OF ASSETS IN AN INDUSTRIAL PLANT**

(71) Applicant: ABB SCHWEIZ AG, 5400 Baden (CH)
(72) Inventor: WAGENER, Dirk, 31655 Stadthagen (DE); HEEGE, Marcus, 56759 Kaisersesch (DE); WELTE, Christoph, 89233 Neu-Ulm (DE)
(74) Representative: Maiwald GmbH

(57) **Abstract**

A computer-implemented method (100) for managing a plurality of assets (2) in an industrial plant (1), said assets (2) being configured to interact with an industrial process executed on the industrial plant (1), the method comprising the steps of:
• obtaining (110), for each asset (2), a set of properties (2a) of this asset (2), and/or a location (2b) in the industrial plant (1) where this asset (2) is installed;
• providing (120) a set of rules (3), each rule (3) stipulating that the asset (2) is to be assigned to a group (4) in response to a condition (3a) regarding at least one of its properties (2a), and/or regarding its location (2b), being met;
• determining (130), for each asset (2), one or more rules (3*) from the set of rules (3) whose conditions (3a) are met by this particular asset (2);
• assigning (140) the asset (2) to one or more groups (4) based on the sodetermined rules (3*); and
• applying (150) a collective actuating and/or configuring action (5) to all assets (2) belonging to at least one particular group (4).

## Description

### FIELD OF THE INVENTION

The invention relates to the management of industrial assets that are in physical interaction with an industrial process executed on an industrial plant.

### BACKGROUND

A typical industrial plant comprises many thousand assets, such as field devices and other equipment that interacts with an industrial process executed on an industrial plant. All these assets are usually managed by an asset management system, such as a Field Information Manager. The asset management system is, inter alia, responsible for keeping the configuration of the field devices in line with the needs of the process and the plant as a whole.

When changes to the configuration of assets are needed, this usually affects multiple assets, rather than only one single asset. Therefore, assets are manually assigned to groups, so that a management action can be instructed to be performed on a group of assets in one go, rather than on each asset individually. This provides a net simplification of the asset management, provided that the assignment of assets to groups is kept up-to-date and always meets the needs of the industrial plant and the process executed on it.

### OBJECTIVE OF THE INVENTION

It is an objective of the present invention to further simplify the asset management and reduce the amount of manual work that the asset management requires.

This objective is achieved by the method according to the independent claim. Further advantageous embodiments are detailed in the dependent claims.

### DISCLOSURE OF THE INVENTION

The invention provides a computer-implemented method for managing a plurality of assets in an industrial plant. The assets are configured to interact with an industrial process executed on the industrial plant. Examples for assets include field devices, such as sensors for measurement quantities of any type, actors for physically influencing the industrial process, and controllers that are configured to keep a desired quantity at or near a predetermined set-point value.

In the course of the method, for each asset, a set of properties of this asset, and/or a location in the industrial plant where this asset is installed, is obtained. In this manner, a topology of assets and properties in the industrial plant is acquired.

A set of rules is provided. Each rule stipulates that the asset is to be assigned to a group in response to a condition regarding at least one of its properties, and/or regarding its location, is met. That is, if the condition of a rule is met, the asset belongs to the group indicated by the rule. Multiple such rules may cause one and the same asset to belong to multiple groups.

For each asset, one or more rules from the set of rules are determined whose conditions are met by this particular asset. That is, for each rule, it is checked whether the asset meets the condition of the respective rule. Based on the so-determined rules, the asset is assigned to one or more groups. Rules may be positive, i.e., if the condition is met by an asset, the asset is included in the group specified by the rule. Rules may also be negative, i.e., if the condition is met by an asset, the asset is excluded from the group specified by the rule. That is, each meeting of the condition of a rule may earn the asset membership in the respective group specified by the rule, or cause the asset to lose membership in that group. The effects of different rules on one and the same asset may be aggregated in any suitable manner. For example, the rules may be processed in the order in which they occur in the set of rules. In particular, a user interface for defining rules may be provided. Alternatively or in combination to this, a rule language for defining more complex rules may be provided.

A collective actuating and/or configuring action is applied to all assets belonging to at least one particular group. This action is not limited to changes that happen on the assets themselves. Rather, the action may also be applied to the handling of the assets within the industrial plant, while the assets themselves remain unchanged. For example, the collective actuating and/or configuring action may define update rates for OPC UA subscriptions and OPC UA publish/subscribe dissemination of information for assets belonging to different groups. Also, any kind of bulk operation, such as uploading and downloading of datasets, printing device datasets, or observing the device status information in a dashboard may be performed on all members of a particular group.

In particular, a group created in this manner may serve as a flexible filter with which, from a very large number of assets in a plant, those assets on which an arbitrary collective and/or bulk operation shall be performed can be selected. In particular, bulk operations may mean that wherever an individual asset was previously addressed, a whole group is now being addressed. For example, in any place where an identifier of an individual asset was previously used, an identifier of the group may now be used.

In this manner, the pre-existing system that is based on pre-set group memberships is extended to groups whose members are determined automatically. If these groups are used as targets for actuating and/or configuring actions, the action will always meet its intended target even if the landscape of assets, and/or the landscape of rules, changes. That is, changes in the set of known devices, in device properties, of group definitions, and changes of abstractions used in the rules can automatically affect the settings of all groups. In particular, the set of rules may be so complex that it is difficult, if not impossible, to keep track of group memberships manually and to keep group memberships up-to-date in response to any changes in the asset landscape. In a typical industrial plant, the asset landscape may comprise on the order of 60,000 assets.

For example, while operating a plant, the asset landscape can change, e.g., because an asset is replaced in the course of maintenance, added, or removed. The manual adjustment of group memberships to those changes is error-prone and can easily be omitted.

Also, the set of rules is more readable and understandable than a collection of groups and their memberships. In the absence of a self-explanatory name or description that is stored in association with a group, it is not directly discernible for which reason a particular asset belongs to a particular group. In particular, this applies if, for reasons of expediency, one group comprises devices that are members for different reasons. For example, multiple assets that are relevant for tracking the emissions of different pollutants from the industrial plant may be together in one group "emission-relevant". But given just the group "emission-relevant" and its members, it is no longer discernible which concrete pollutant has earned each member of this group its membership. By contrast, in the rule-based system, one rule may correspond to each reason why an asset is a group member.

What is more, it becomes easier to establish a hierarchy of nested groups where a member of a subordinate group automatically also becomes a member of a superordinate group. In a simple example, there may be subordinate groups each of stirrers, motors, valves, pressure gauges and temperature gauges, and superordinate groups of actuators and sensors. Every asset that is in the groups "stirrers", "motors" or "valves" also belongs into the group "actuators", whereas every asset that is in the groups "pressure gauges" or "temperature gauges" also belongs into the group "sensors". If a new device is manually added into one of the subordinate groups, it is easily omitted to add it to the respective superordinate group. Likewise, it is possible that the device is manually added into a superordinate group, but it is omitted to also add it to one of the subordinate groups. The automatic determination of group memberships based on rules ensures consistency and a better functioning of asset management actions that are triggered by virtue of a group membership. In particular, it is avoided that only one of two required actions is performed on an asset because that asset is erroneously in only one of the two groups in which it should be.

As mentioned above, the asset landscape in the industrial plant is subject to change. Any suitable condition may be used for triggering the re-computation of group memberships. For example, the group memberships may be re-computed whenever a new asset appears in the industrial plant, or whenever an existing asset is found to be no longer reachable.

In a particularly advantageous embodiment, the properties of the at least one asset comprise one or more of:
- a device type of the asset;
- a functionality provided by the asset;
- a prerequisite for the functioning of the asset;
- support for at least one particular common name or semantic ID; and
- the availability of at least one particular parameter for reading and/or writing.

Examples for device types include sensors, such as temperature sensors, pressure gauges, voltage sensors, current sensors, proximity sensors, and cameras, as well as actors, such as motors, valves, stirrers, or controllers. In particular, one and the same asset may be a combination of multiple assets, and may therefore have multiple device types.

Examples for functionalities provided by the asset include readings of measurement values, actions of any sort performed on the process that is being executed on the industrial plant, and the possibility to control this process in a manner that certain quantities (such as measurement values) are kept at or near a set-point value.

Examples for prerequisites for the functioning of an asset include the availability of electricity, fuel, water, network connectivity, an educt for a process, and any other commodity, as well as the possibility to carry away any products produced by the asset, such as a product of a process, exhaust gases or sewage. Prerequisites for the functioning of an asset may also include environmental conditions, such as temperature or humidity, or the possibility to carry away heat produced by the asset.

Support for at least one particular common name or semantic ID may, in particular, mean that the asset can be called upon by means of that common name or semantic ID in order to query it for information, read or set internal variables, instruct it to perform an action, or change its state or behavior on any other way. In particular, in the industrial plant, it may be the job of a distributed control system, DCS, to call upon the assets for running the plant and the process executed on it from moment to moment, and it may be the job of the asset management system to configure the assets such that they may function properly in their assigned role in the plant.

Similarly, the availability of at least one particular parameter for reading and/or writing may, in particular, mean that there is some command, method call or other manner available to read and/or write a parameter, and when this command, method call or other manner is used, the reading and/or writing actually happens.

When running and/or maintaining the plant, it is very advantageous to be able to create groups ad-hoc in order to perform actions on many assets in one go. For example, if a commodity such as energy or water, or any other resource that may be a prerequisite for the functioning of an asset, is to be temporarily unavailable, it may be advantageous to request all assets that depend on this prerequisite to go dormant or to shut down in an orderly manner. In another example, if a problem in the plant is to be tracked down, it may be advantageous to query all sensors of a certain kind (such as vibration sensors) in a certain area for measurement values. Since such needs arise unexpectedly, even if there is a system of manually created groups in place, this system will not comprise groups that are specifically linked to said prerequisites. The possibilities are too numerous for manual creation of such groups in advance.

Parameters may, in particular, relate to quantities that are relevant for the industrial process that is being executed, but they may also relate to the operating state of the asset. In a further particularly advantageous embodiment, the at least one particular parameter comprises one or more of:
- operating hours, and/or another usage indicator;
- a maintenance indicator; and
- operating temperature.

In this manner, the operation of the assets may be tailored to their respective states in order to improve the reliability of the industrial process that is being executed on the industrial plant. For example, if an asset is at a high operating temperature or very close to maintenance being due, the asset management system may reconfigure the asset to ease the load on it, so as to increase the chance that the asset will actually make it to the next scheduled maintenance. Also, self-test or self-cleaning routines may be executed on highly used or already ailing assets, and/or such assets may be monitored more closely in the future in order to spot any signs of the state of the asset deteriorating.

In a further particularly advantageous embodiment, the location of the asset in the industrial plant designates one or more of:
- a building where the asset is installed;
- a section of the plant where the asset is installed;
- coordinates of the location where the asset is installed; and
- one or more superordinate parent assets to which the asset is connected.

These indications of the location correspond to frequently arising needs for performing actuating and/or configuring actions on all assets in a particular location. For example, a remote I/O device may be a parent asset for a number (e.g., 5) of field devices as subordinate assets, and a controller master may be a parent asset for a number (e.g., 200) of subordinate assets. For example, if a superordinate parent asset is to be taken off-line for maintenance, which will cause all subordinate assets to become temporarily unreachable, it may become necessary to prepare for this by instructing the subordinate assets accordingly. Thus, in a particularly advantageous embodiment, at least one parent asset is a controller master device, and/or a remote I/O device for assets that are addressed via data-driven I/O ports.

Said indications of the location may also correspond to maintenance arrangements for the assets. For example, the location may be tied to certain persons to whom maintenance of the respective asset is assigned. Maintenance rounds performed by a specific person are another reason why ad-hoc performing of actuating and/or configuring actions on assets of particular groups (e.g., all assets affected by this maintenance round) may become necessary.

Thus, in a further particularly advantageous embodiment, the designation of the location of the asset in the industrial plant (e.g., the section of the plant) also designates
- a functional unit within the plant; and/or
- a realm of responsibility for maintenance of assets.

For automatically obtaining the properties of assets and then assigning these assets to groups, any suitable source may be exploited. Therefore, in a particularly advantageous embodiment, at least a subset of the properties of at least one asset is obtained from one or more of:
- an electronic device description, EDD;
- a field device integration, FDI, package; and
- any other device driver
   relating to this asset. These are commonly used machine-readable forms of conveying the information about the type and capabilities of assets, as well as how to interact with the asset.

By incorporating the mentioned properties, and/or the location, of assets into conditions of rules, even a fully automatic configuration of a new asset that takes the place of a previous asset becomes possible. That is, after the asset has been connected to the network and discovered by the asset management system, it may be automatically discovered that this asset shall fulfil the function of a previously installed asset, and the asset management system may configure it accordingly. No manual transferring of the previous configuration is required. A typical industrial plant as a whole may be in service for 15 years or more, and given that it may comprise 60,000 assets or more, the probability that some assets will have to be replaced at some times is quite high. When this happens, the exact model of the old asset is frequently no longer available, so a new asset that is of a different model, or even of a different manufacturer, will need to be used. It is therefore not possible to use a 1:1 copy of the old configuration that has been backed up somewhere. But according to the method proposed here, the new asset may be configured just like the previous one by moving it to the correct group according to the rules in the set of rules.

In a further particularly advantageous embodiment, the collective actuating and/or configuring action comprises:
- reading, from the asset, a value of at least one parameter that is indicative of the operating state of the asset, and/or of the state of the industrial process; and/or
- writing, to the asset, a value of at least one parameter with the goal of modifying the behavior of the asset, and/or of the industrial process.

This reading and/or writing may be performed in any suitable manner depending on how the interface is configured to be interacted with. For example, if the asset is a "data-driven" asset, reading and writing of parameters is performed by accessing I/O ports. By contrast, if the asset is OPC UA aware, reading and writing of parameters is performed by means of function calls and method calls.

In a further particularly advantageous embodiment, collective actuating and/or configuring actions are repeated at different intervals for different identified groups of assets. In this manner, limited resources for performing these actions may be focused on those assets where the benefit of performing the actions more frequently for the industrial process that is being executed, and/or for the industrial plant as a whole, is most pronounced.

In one example, the intensity with which assets are monitored may be tailored to the propensity that this monitoring will actually reveal a problem with the asset. If the asset is used heavily and/or already close to a required maintenance, then it is more worthwhile to monitor more closely than an asset that has just freshly come out of maintenance. That is, if the capacity for the monitoring is limited in any way (e.g., in terms of processing power or network bandwidth), it may be focused on the assets that need it most.

In another example, impinging requests for certain values from other entities may be rate-limited depending on the group that the asset belongs to. For example, if an asset management system receives requests for many thousands of properties of different assets every millisecond, it may request the respective properties from the assets in question at intervals that are commensurate with the rate at which the properties may change in the first place, and return the latest retrieved value to every requester. For example, if a request for the number of operating hours comes in every millisecond, it makes no sense to forward each such request to the asset. Rather, it is much more economical in terms of resources to retrieve the value from the asset once a day and respond to all requests with this value until the next value is retrieved from the asset. In a similar manner, a measured electronics temperature of an asset will not change on a time scale of a millisecond either because the thermal mass puts an inertia in the way of temperature changes. Rather, it makes sense to retrieve the temperature value, e.g., once an hour. On the other hand, there are other quantities where a closer monitoring makes sense. For example, if the pattern of the current consumption of a valve or a motor changes, this may indicate that something is mechanically stuck.

In another example, the frequency at which values are read out from assets may be commensurate to the importance of the respective assets for the functioning of the process that is being executed. If the failure of one particularly critical asset will bring the whole process to a halt, it is much more important to monitor this asset more closely than it is to monitor, e.g., pumps in a parallel pump configuration where the failure of one pump can be easily compensated by increasing the output of the other pumps.

Thus, the asset management entity may sort of broker the responses to requests for values of assets according to the membership of these assets in groups. That is, the method may further comprise:
- reading, from assets belonging to different groups, values of at least one parameter at regular intervals that differ between the groups;
- storing the read values in a buffer memory;
- receiving, from at least one client, requests for said values of at least one parameter; and
- responding to each such request with the respective value stored in the buffer memory.

In particular, this may ease the load on operation technology (OT) networks in industrial plants that are frequently the only path to reach these assets. These networks frequently have a smaller bandwidth than information technology (IT) networks. Also, the assets typically do not have enough on-board processing capacity to handle hundreds of thousands of requests per second. Rather, most field devices have only little more hardware resources than is absolutely necessary to perform their primary function.

In a further particularly advantageous embodiment, the assignment of assets to groups depending on whether conditions of rules are met is performed by an asset management server of the industrial plant. Memberships of assets in groups are published, by the asset management server, to a plurality of asset management clients within the industrial plant. In this manner, the many tasks that accrue during the management of assets may be delegated (and thus load-balanced) to a plurality of asset management clients. Each such client may avail itself of all groups that have been automatically populated, and of the automatically determined composition of each group. That is, individual asset management clients who use these groups do not have to trigger the automatic determining of group memberships time and time again.

In a further particularly advantageous embodiment, at least one asset management client instructs the asset management server to add a new group and associate at least one rule with this new group. In this manner, groups created by all asset management clients can be pooled and re-used by other asset management clients.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for managing a plurality of assets 2 in an industrial plant 1;
Figure 2: Exemplary application of the method 100 to an industrial plant 1;
Figure 3: Illustration of exemplary possibilities of forming ad-hoc groups 41-47 of devices 2, 21-29 in an industrial plant 1 with three sections 11-13.

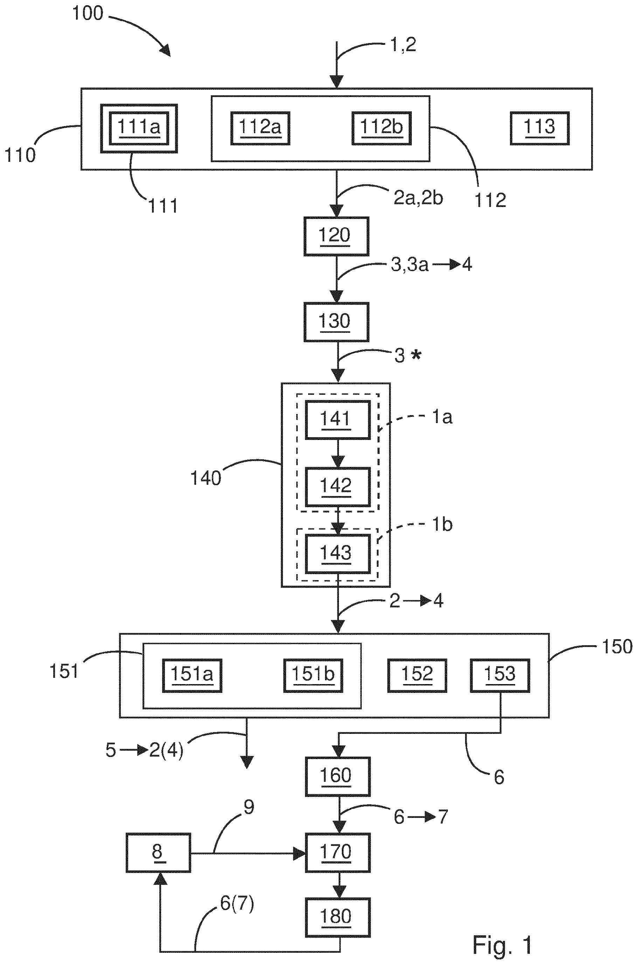

Figure 1 is a schematic flow chart of an exemplary embodiment of the method 100 for managing a plurality of assets 2 in an industrial plant 1. The assets 2 are configured to interact with an industrial process executed on the industrial plant 1.

In step 110, for each asset 2, a set of properties 2a of this asset 2, and/or a location 2b in the industrial plant 1 where this asset 2 is installed, are obtained.

According to block 111, the properties 2a of at least one asset 2 may comprise one or more of:
- a device type of the asset 2;
- a functionality provided by the asset 2;
- a prerequisite for the functioning of the asset 2;
- support for at least one particular common name or semantic ID; and
- the availability of at least one particular parameter for reading and/or writing.

According to block 111a, the at least one particular parameter may comprise one or more of:
- operating hours, and/or another usage indicator;
- a maintenance indicator; and
- operating temperature.

According to block 112, the location 2b of the asset 2 in the industrial plant 1 may designate one or more of:
- a building where the asset 2 is installed;
- a section 11-13 of the plant 1 where the asset 2 is installed;
- coordinates of the location where the asset 2 is installed; and
- one or more superordinate parent assets to which the asset 2 is connected.

According to block 112a, at least one parent asset may be a controller master device, and/or a remote I/O device for assets that are addressed via data-driven I/O ports.

According to block 112b, the designation of the location 2b of the asset 2 in the industrial plant 1 may also designate:
- a functional unit within the plant 1; and/or
- a realm of responsibility for maintenance of assets 2.

According to block 113, at least a subset of the properties 2a of at least one asset 2 may be obtained from one or more of:
- an electronic device description, EDD;
- a field device integration, FDI, package; and
- any other device driver relating to this asset 2.

In step 120, a set of rules 3 is provided. Each rule 3 stipulates that the asset 2 is to be assigned to a group 4 in response to a condition 3a regarding at least one of its properties 2a, and/or regarding its location 2b, being met.

In step 130, for each asset 2, one or more rules 3* from the set of rules 3 whose conditions 3a are met by this particular asset 2 are determined.

In step 140, the asset 2 is assigned to one or more groups 4 based on the so-determined rules 3*.

According to block 141, the assignment of assets 2 to groups 4 depending on whether conditions 3a of rules 3 are met may be performed by an asset management server 1a of the industrial plant 1. According to block 142, memberships of assets 2 in groups 4 may then be published, by the asset management server 1a, to a plurality of asset management clients 1b within the industrial plant 1.

According to block 143, at least one asset management client 1b may instruct the asset management server 1a to add a new group 4* and associate at least one rule 3 with this new group 4*.

In step 150, a collective actuating and/or configuring action 5 to all assets 2 belonging to at least one particular group 4.

According to block 151, the collective actuating and/or configuring action 5 may comprise:
- reading 151a, from the asset 2, a value of at least one parameter that is indicative of the operating state of the asset 2, and/or of the state of the industrial process; and/or
- writing 151b, to the asset 2, a value of at least one parameter with the goal of modifying the behavior of the asset, and/or of the industrial process.

According to block 152, collective actuating and/or configuring actions 5 may be repeated at different intervals for different identified groups 4 of assets 2.

According to block 153, as collective action 5, values 6 of at least one parameter may be read, from assets 2 belonging to different groups 4, at regular intervals that differ between the groups 4. In step 160, the read values may then be stored in a buffer memory 7. In step 170, from at least one client 8, requests 9 for said values 6 of at least one parameter may then be received from at least one client 8. Each such request 9 may then be responded to with the respective value 6 stored in the buffer memory 7.

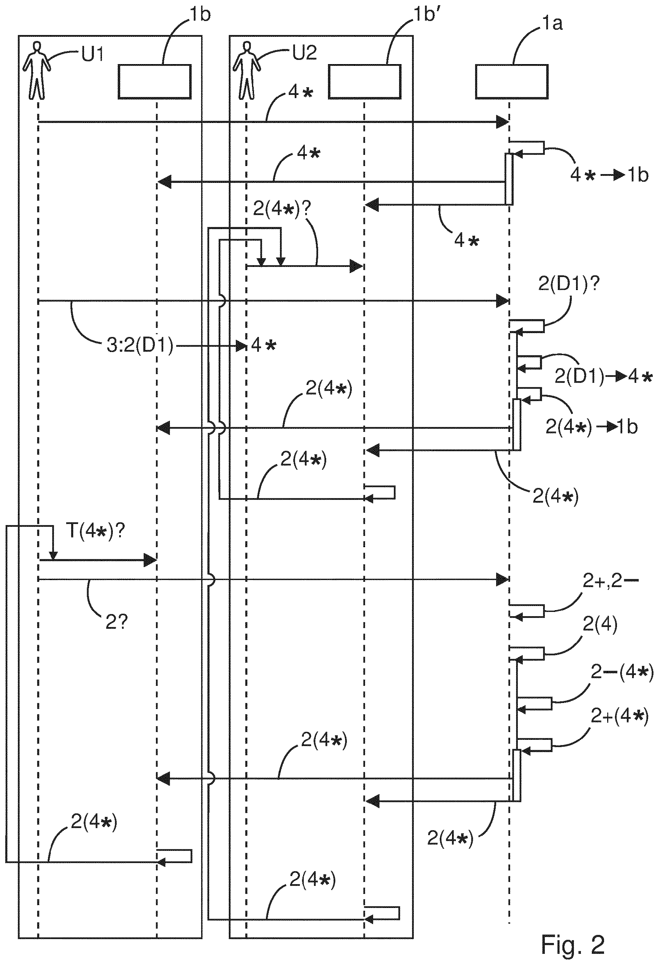

Figure 2 illustrates an exemplary application of the method in an industrial plant 1. In the example shown in Figure 2, two asset management clients 1b (operated by user U1) and 1b' (operated by user U2) communicate with an asset management server 1a to manage assets 2 of the industrial plant 1. Figure 2 shows an exemplary dialogue between the asset management clients 1b and 1b' on the one hand, and the asset management server 1a on the other hand.

The dialogue begins with the asset management client 1b, on behalf of the user U1, sending a request for the creation of a new group 4* to the asset management server 1a. The asset manager 1a publishes information on the new group 4* to all asset management clients, of which only clients 1b and 1b' are shown in Figure 2.

After having learned that there is a new group 4*, the user U2 opens a new device list view and filter based on the new group 4* on asset management client 1b'. Since no rule 3 has been associated with the new group 4* yet, and the new group 4* has thus no members yet, this view is empty for now.

Next, on behalf of the user U1, the asset management client 1b requests the asset management server 1a to create a new rule stipulating that all assets 2 that are children 2(D1) of device D1 shall be members of the new group 4*. The asset management server 1a then checks for children 2(D1) of device D1 and adds them to the new group 4*. The new members 2(4*) of group 4* are then published to all asset management clients 1b, 1b'. Inter alia, this causes the device list view and filter that were previously created on asset management client 1b' to become populated.

Next, user U1 opens a new topology tree view and filter T(4*) and filter based on the new group 4*. This view will be populated immediately after creation because the new group 4* already has some members.

Next, on behalf of the user U1, the asset management client 1b requests the asset management server 1a to scan the industrial plant 1 for added devices 2+ and removed devices 2-. The asset management server 1a performs this scan and re-evaluates all group memberships 2(4) for all groups 4 based on the results of this scan. In particular, this causes devices 2+(4*) to be added to the new group 4* and devices 2-(4*) to be removed from the new group 4*. The updated group memberships 2(4*) of the new group 4* are published to all asset management clients 1b, 1b'.

This update will propagate both to the device list view and filter previously created on asset management client 1b' and to the topology tree view T(4*) that has just been created on asset management client 1b.

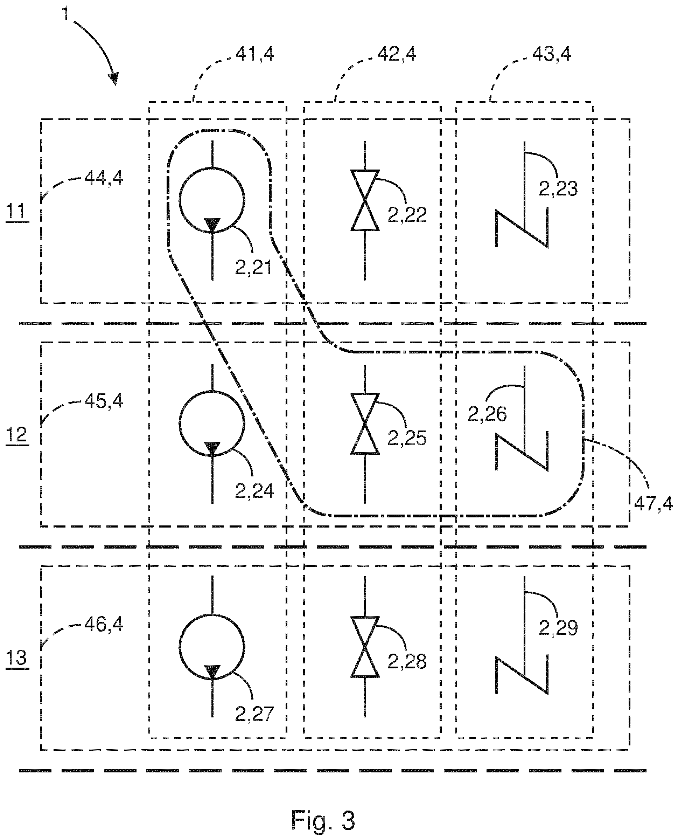

Figure 3 illustrates, on a simple example, different ways of automatically creating and populating ad-hoc groups 41-47 of devices 2, 21-29 in an industrial plant 1 having three sections 11-13.

In the example shown in Figure 3, section 11 contains a pump 21, a valve 22 and a stirrer 23 as assets 2. Section 12 contains a pump 24, a valve 25 and a stirrer 26 as assets 2. Section 13 contains a pump 27, a valve 28 and a stirrer 29 as assets 2.

A first exemplary way of defining ad-hoc groups 4 is to group assets 2 of same types. This yields a group 41 comprising all pumps 21, 24 and 27, a group 42 comprising all valves 22, 25 and 28, and a group 43 comprising all stirrers 23, 26 and 29.

A second exemplary way of defining ad-hoc groups 4 is to group assets 2 in same sections 11-13. This yields a group 44 with devices 21-23 in section 11, a group 45 with devices 24-26 in section 12, and a group 46 with devices 27-29 in section 13.

But as discussed before, groups 4 can also be formed according to other criteria, such as assets 2 being soon due for maintenance. In the example shown in Figure 3, this creates another group 47 comprising the pump 21 of section 11, as well as the valve 25 and the stirrer 26 of section 12.

The high number of possibilities to create groups 4 based on rules 3 precludes the manual creation and maintenance of these groups 4.

### List of reference signs:

- 1: industrial plant
- 1a: asset management server in industrial plant 1
- 1b, 1b': asset management clients in industrial plant 1
- 11-13: sections of industrial plant 1
- 2: assets in industrial plant 1
- 2a: properties of asset 2
- 2b: location of asset 2
- 2+: assets added after hardware scan of industrial plant 1
- 2-: assets removed after hardware scan of industrial plant 1
- 21-29: individual assets 2
- 3: rule
- 3*: rule that is matched by particular asset 2
- 3a: condition of rule 3
- 4: group of assets 2
- 4*: new to-be-created group 4
- 41-47: individual groups 4
- 5: collective actuating and/or configuring action
- 6: values of parameters
- 7: buffer memory
- 8: client
- 9: request for value 6 from client 8
- 100: method for managing assets 2 in industrial plant 1
- 110: obtaining properties 2a, locations 2b of assets 2
- 111: specific choices of properties
- 111a: specific choices of parameters
- 112: specific choices of location indicators 2b
- 112a: using parent asset as location indicator 2b
- 112b: using organizational boundaries as location indicator 2b
- 113: exploiting machine-readable sources for properties 2a
- 120: providing set of rules 3
- 130: determining rules 3* whose conditions 3a are met by asset 2
- 140: assigning asset 2 to groups 4 based on matching rules 3*
- 141: performing assigning 140 by asset management server 1a
- 142: publishing memberships of assets 2 in groups 4
- 143: instructing asset management server 1a to create new group 4*
- 150: performing collective actuating and/or configuring action 5
- 151: specific choices for collective actions 5
- 151a: reading parameter value as collective action 5
- 151b: writing parameter value as collective action 5
- 152: repeating collective actions 5 at different intervals
- 153: reading values 6 at different intervals as collective action 5
- 160: storing read values in buffer memory 7
- 170: receiving requests 9 for parameter values 6 from client 8
- 180: responding to client 8 with value 6 from buffer memory 7
- D1: parent device
- T: topology view

## Claims

1. A computer-implemented method (100) for managing a plurality of assets (2) in an industrial plant (1), said assets (2) being configured to interact with an industrial process executed on the industrial plant (1), the method comprising the steps of:
• obtaining (110), for each asset (2), a set of properties (2a) of this asset (2), and/or a location (2b) in the industrial plant (1) where this asset (2) is installed;
• providing (120) a set of rules (3), each rule (3) stipulating that the asset (2) is to be assigned to a group (4) in response to a condition (3a) regarding at least one of its properties (2a), and/or regarding its location (2b), being met;
• determining (130), for each asset (2), one or more rules (3*) from the set of rules (3) whose conditions (3a) are met by this particular asset (2);
• assigning (140) the asset (2) to one or more groups (4) based on the so-determined rules (3*); and
• applying (150) a collective actuating and/or configuring action (5) to all assets (2) belonging to at least one particular group (4).

2. The method (100) of claim 1, wherein the properties (2a) of at least one asset (2) comprise (111) one or more of:
• a device type of the asset (2);
• a functionality provided by the asset (2);
• a prerequisite for the functioning of the asset (2);
• support for at least one particular common name or semantic ID; and
• the availability of at least one particular parameter for reading and/or writing.

3. The method (100) of claim 2, wherein the at least one particular parameter comprises (111a) one or more of:
• operating hours, and/or another usage indicator;
• a maintenance indicator; and
• operating temperature.

4. The method (100) of any one of claims 1 to 3,
wherein the location (2b) of the asset (2) in the industrial plant (1) designates (112) one or more of:
• a building where the asset (2) is installed;
• a section (11-13) of the plant (1) where the asset (2) is installed;
• coordinates of the location where the asset (2) is installed; and
• one or more superordinate parent assets to which the asset (2) is connected.

5. The method (100) of claim 4, wherein at least one parent asset is (112a) a controller master device, and/or a remote I/O device for assets that are addressed via data-driven I/O ports.

6. The method (100) of any one of claims 4 to 5,
wherein the designation of the location (2b) of the asset (2) in the industrial plant (1) also designates (112b)
• a functional unit within the plant (1); and/or
• a realm of responsibility for maintenance of assets (2).

7. The method (100) of any one of claims 1 to 6,
wherein at least a subset of the properties (2a) of at least one asset (2) is obtained (113) from one or more of:
• an electronic device description, EDD;
• a field device integration, FDI, package; and
• any other device driver
relating to this asset (2).

8. The method (100) of any one of claims 1 to 7,
wherein the collective actuating and/or configuring action (5) comprises (151):
• reading (151a), from the asset (2), a value of at least one parameter that is indicative of the operating state of the asset (2), and/or of the state of the industrial process; and/or
• writing (151b), to the asset (2), a value of at least one parameter with the goal of modifying the behavior of the asset, and/or of the industrial process.

9. The method (100) of any one of claims 1 to 8,
wherein collective actuating and/or configuring actions (5) are repeated (152) at different intervals for different identified groups (4) of assets (2).

10. The method (100) of any one of claims 1 to 9, further comprising:
• reading (153), from assets (2) belonging to different groups (4), values (6) of at least one parameter at regular intervals that differ between the groups (4);
• storing (160) the read values (6) in a buffer memory (7);
• receiving (170), from at least one client (8), requests (9) for said values (6) of at least one parameter; and
• responding (180) to each such request (9) with the respective value (6) stored in the buffer memory (7).

11. The method (100) of any one of claims 1 to 10,
wherein
• the assignment of assets (2) to groups (4) depending on whether conditions (3a) of rules (3) are met is performed (141) by an asset management server (1a) of the industrial plant (1); and
• memberships of assets (2) in groups (4) are published (142), by the asset management server (1a), to a plurality of asset management clients (1b) within the industrial plant (1).

12. The method (100) of claim 11, wherein at least one asset management client (1b) instructs (143) the asset management server (1a) to add a new group (4*) and associate at least one rule (3) with this new group (4*).

13. A computer program, comprising machine-readable instructions that, when executed by one or more computers and/or compute instances, causes the one or more computers and/or compute instances to perform the method (100) of any one of claims 1 to 12.

14. A non-transitory machine-readable data carrier, and/or a download product, with the computer program of claim 13.

15. One or more computers and/or compute instances with the computer program of claim 13, and/or with the data carrier and/or download product of claim 14.
